# EUROPÄISCHE PATENTSCHRIFT

(11) **EP 1 972 961 B1**
(45) Veröffentlichungstag und Bekanntmachung des Hinweises auf die Patenterteilung: **01.02.2012**
(21) Anmeldenummer: 08102606.4
(22) Anmeldetag: 14.03.2008
(51) Int. Cl.: G01S 7/487, G01S 17/10, G01S 7/497

(54) **Optoelektronischer Sensor und Verfahren zur Messung einer Entfernung oder einer Entfernungsänderung**
Optoelectronic sensor and method for measuring distance or a change in distance
Capteur optoélectronique et procédé de mesure de l'éloignement ou de la modification de l'éloignement

(30) Priorität: 22.03.2007 DE 102007013714
(43) Veröffentlichungstag der Anmeldung: 24.09.2008
(73) Patentinhaber: SICK AG, 79183 Waldkirch (DE)
(72) Erfinder: Hug, Gottfried, 79183 Waldkirch (DE); Heizmann, Reinhard, 79286 Glottertal (DE)
(74) Vertreter: Hehl, Ulrich

(56) Entgegenhaltungen:
- EP-A- 1 752 789
- EP-A2- 0 427 969
- WO-A-98/18061
- WO-A-2005/006016
- US-A- 3 992 615

## Beschreibung

Die Erfindung betrifft einen optoelektronischen Sensor und ein Verfahren zur Messung einer Entfernung oder einer Entfernungsänderung nach dem Lichtlaufzeitverfahren gemäß den Oberbegriffen von Anspruch 1 bzw. 14.

Die Entfernung eines Objekts kann optisch nach dem Prinzip des Laufzeitverfahrens bestimmt werden. Dazu kann einem Lichtstrahl ein Sendemuster aufgeprägt werden, das bei Empfang des von dem Objekt reflektierten Lichts mit einem intern erzeugten Referenzmuster verglichen wird. Daraus lässt sich der Lichtweg und damit auch der Abstand errechnen. In der Praxis werden im Wesentlichen zwei Verfahren angewandt. Bei dem einen Verfahren ist das Sendemuster ein einfacher Lichtpuls, dessen Laufzeit gemessen wird. Bei dem anderen Verfahren ist das Sendemuster eine Sinusmodulation, wobei die Phasenlage des Sinus gegenüber einem Referenzsinus modulo der Periode des Sinus der Laufzeit entspricht.

Die Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine Reflexionslichtschranke, bei welcher der Abstand zwischen Lichtsender und Reflektor überwacht wird.

Bei dem hier betrachteten Messverfahren der Lichtlaufzeit kann man zwei Signalpfade unterscheiden. Auf dem internen Referenzpfad gibt es keinen Lichtweg, die Laufzeit hängt also auch nicht von der Entfernung des Objekts ab. Auf dem externen Messpfad addiert sich zu einer internen Laufzeitkomponente die distanzabhängige externe Laufzeitkomponente des Lichtes.

Die Entfernung bestimmt sich somit gerade aus der externen Laufzeitkomponente, also dem Zeitintervall zwischen Aussenden und Empfangen des Lichtpulses. Da der Aussendezeitpunkt bekannt ist, bedeutet Messung der Lichtlaufzeit Messung des Empfangszeitpunkts. Dazu wird im Stand der Technik ein zum Aussendezeitpunkt synchrones Referenzmuster mit dem Empfangsmuster korreliert. Durch präzise Auswahl der Verzögerung des Aussendezeitpunkts können Referenz- und Empfangsmuster zum Übereinanderliegen gebracht und daraus der Empfangszeitpunkt ermittelt werden.

Zu diesem Zweck ist es einmal erforderlich, den Aussendezeitpunkt mit einer hohen zeitlichen Präzision gezielt zu verzögern. Ein Verfahren hierfür ist unter dem Aktenzeichen DE 10 2006 047 778.2 von derselben Anmelderin vorgestellt worden.

Außerdem muss die Korrelation von Referenz- und Empfangsmuster den empfangenen Lichtpuls mit entsprechender zeitlicher Präzision wiederfinden. Im Stand der Technik wird hier ein analoger Mischer eingesetzt, der zum Beispiel eine Abweichung der zunächst eingelernten bestmöglichen Korrelation als Entfernungsänderung des eingelernten Ziels erkennt. Alternativ kann die Korrelation auch den zeitlichen Abstand zwischen Referenz- und Empfangsmuster und daraus die absolute Entfernung ermitteln. Nun ist aber keineswegs ein ausreichend hohes Signal/Rausch-Verhältnis sichergestellt. Im Gegenteil kann wegen Umgebungslicht, anderen Lichtquellen, insbesondere auch weiteren optoelektronischen Sensoren, der Störpegel in einem Bereich von bis zu sechs Dekaden schwanken. Auch das Nutzsignal kann je nach Entfernung erhebliche Amplitudenunterschiede zeigen.

Dieser Signaldynamik wird ein analoger Mischer nicht gerecht, so dass der Empfangszeitpunkt nicht mit ausreichender Genauigkeit bestimmt werden kann. Ein weiterer Nachteil des analogen Mischers ist, dass er bei schnell aufeinanderfolgenden Messungen beim Empfang des nächsten Messpulses wegen des vorherigen Messpulses noch nicht wieder in einen Nullzustand zurückgekehrt ist. Die Folge ist, dass in einigen Situationen keine Entfernung gemessen werden kann oder die Entfernungsmessung zumindest ungenau bleibt.

Aus der WO 2005/006016 A1 ist ein Laser-Entfernungsmesser bekannt, der Sendepulse aussendet und das Empfangssignal zunächst verstärkt, differenziert und filtert. Mittels eines Spannungsschwelldetektors wird anschließend ein binäres Signals erzeugt, in welchem eine "1" positive und eine "0" negative Signalanteile codiert. Diese binären Signale werden in vielfacher Wiederholung von Einzelmessungen kumuliert. Abschließend werden durch eine Schwellbewertung Maxima in den kumulierten Daten gesucht, und deren Lage bestimmt dann die gemessene Entfernung.

Die WO 98/18061 A1 beschreibt eine Vorrichtung zur Zeitmessung für ein laserbasiertes Lichtlaufzeitsystem. Die Vorrichtung misst mit einem Zähler das Intervall zwischen einem Startsignal bei Aussenden und einem Stopsignal bei Empfang des Lichtsignals. Diese Messung kann vielfach unter jeweils zufälliger künstlicher Verzögerung des Sendens wiederholt werden, und der Entfemungsmesswert wird als Mittel über die Einzelmesswerte bestimmt.

Aus der EP 0 427 969 A2 ist eine Impulslaufzeitmessanordnung bekannt, welche einen Parallel-Addierer für die Aufzeichnung des Empfangssignals in einer Anzahl von Kanälen aufweist. Mit Hilfe eines Differenzierglieds wird erreicht, dass zur Bestimmung des Empfangszeitpunkts anstelle eines Maximums des Eingangssignals ein steiler Durchgang durch einen Mittelwert des Rauschens feststellbar ist.

Daher ist Aufgabe der Erfindung, eine Entfernungsmessung mit einem optoelektronischen Sensor präzise und robust gegen Störeinflüsse zu ermöglichen.

Diese Aufgabe wird durch einen Sensor gemäß Anspruch 1 beziehungsweise ein Verfahren gemäß Anspruch 14 gelöst. Diese Lösung hat den Vorteil, dass auch bei schlechtem Signal/Rausch-Verhältnis eine präzise Bestimmung des Empfangszeitpunkts und damit der Entfernung möglich ist. Somit ist der Sensor unempfindlich gegenüber Störlicht und kann über einen großen Entfernungsbereich eingesetzt werden. Zugleich kann der Messkern kostengünstig und auf kleinstem Raum ausgeführt werden. Wegen der komprimierten digitalen Auswertung kann der gesamte Sensor eine Kompaktheit erreichen, die ihn auch dort einsetzbar macht, wo er nach dem Stand der Technik schlicht räumlich nicht gepasst hätte. Gerade die Auswertung eines bipolaren Signals hängt nicht vom Empfangspegel ab, eine Bewertung des ursprünglichen unipolaren Signals aus dem Lichtempfänger ist dagegen stark von diesem Empfangspegel abhängig. Erfindungsgemäß kann also unabhängig von Reflexions- und Umgebungslichtbedingungen der Empfangszeitpunkt äußerst präzise bestimmt werden.

Die erfindungsgemäße Lösung geht von dem Grundgedanken aus, eine Vielzahl von Einzellichtpulsen auszusenden und deren Information statistisch auszuwerten. Dabei ist die Wiederholungsfrequenz der Aussendung hoch genug, um trotz der Mehrfachmessung zur Erzeugung der für die Statistik notwendigen Daten noch eine rasche Entfernungsbestimmung zu ermöglichen. Durch geschickte Auswahl und Ausnutzung von analogen und digitalen Bauteilen und einer Vorverarbeitung des Signals zu einem robust und genau auswertbaren bipolaren Signal kann schnell, kompakt und auf kleinstem Raum mit hoher Messgenauigkeit ausgewertet werden.

Bevorzugt weist der Sensor eine digitale Verzögerungsschaltung auf, um über den Lichtsender Einzellichtpulse mit einer definierten Verzögerung auszusenden. Auf diese Weise kann auch der Empfangszeitpunkt des Einzellichtpulses verschoben werden, um in einer die Auswertung erleichternden Weise die Daten für das Histogramm zu erzeugen.

Noch bevorzugter ist der Sensor dafür ausgebildet, die digitale Verzögerungsschaltung mit Verzögerungen anzusteuern, die Abweichungen um die definierte Verzögerung herum aufweisen und nur im Mittelwert der definierten Verzögerung entsprechen, um nichtlineares Verhalten der digitalen Verzögerungsschaltung auszumitteln. Bei den extrem kleinen Verzögerungen in der Größenordnung unterhalb 100 Pikosekunden lässt sich nicht vermeiden, dass die Verzögerungsschaltung die vorgegebene Verzögerung nicht exakt als Verzögerung des Einzellichtpulses weitergibt. Indem Werte um die gewünschte Verzögerung herum hinzugezogen werden, wird quasi eine breitere statistische Basis der Ausgabeverzögerung herangezogen, um somit im Mittel den Verzögerungswert genauer zu treffen.

In vorteilhafter Weiterbildung ist die Auswertungseinheit dafür ausgebildet, die Lichtlaufzeit wie folgt zu bestimmen:
- Auffinden des vorverarbeiteten Signals in einem zeitlichen Messfenster, dessen Breite die Gesamtbreite des Histogramms ist, durch systematische Grobverstellung der Verzögerung des Einzellichtpulses,
- Verschieben eines Übergangspunkts des Signals an einen Beobachtungspunkt in dem Messfenster, insbesondere den Rand des Messfensters, durch systematische Feinverstellung der Verzögerung des Einzellichtpulses, und
- Ermitteln der Lichtlaufzeit aus der erforderlichen Verzögerung.
Somit wird in einem ersten Schritt die ungefähre Lichtlaufzeit bestimmt, da es sehr speicherfressend wäre, ein Histogramm über die gesamte mögliche Reichweite des Sensors aufzunehmen. Erst in einem zweiten Schritt wird die Lage des Histogramms für eine ausreichende zeitliche Präzision der Übergangsbedingung feineingestellt. Damit kann eine Ressourcenschonung ohne Verlust in der zeitlichen Präzision umgesetzt werden.

Der Übergangspunkt ist dabei bevorzugt der erste Nulldurchgang von Maximum auf Minimum des vorverarbeiteten bipolaren Signals. Dieser besondere Übergangspunkt lässt sich mit besonders hoher Präzision auffinden, so dass die Entfernungsmessung des Sensor besonders genau wird. Diese Präzision kann wegen der präzisen Bestimmung der Übergangsbedingung insbesondere auch deutlich feiner sein als die Breite der Bins des Histogramms. Selbstverständlich schließt die Bezeichnung eines Übergangs von Maximum zu Minimum auch die umgekehrte Richtung von Minimum zu Maximum ein; dies ist nur eine Frage der ohnehin frei wählbaren Auswertungsrichtung.

Bevorzugt ist die Auswertungseinheit für die Bestimmung des Empfangszeitpunkts in einer vorgeschalteten Lernphase und eine Auswertung auf Veränderung des Übergangspunkts gegenüber dem eingelernten Empfangszeitpunkt im Betrieb ausgebildet, um eine Entfernungsänderung zu ermitteln. Das den beiden vorigen Absätzen beschriebene Verfahren zur Bestimmung eines geeigneten Messfensters und dessen präzise zeitliche Ausrichtung muss dann nur einmal in einer Lernphase ausgeführt werden, während der Sensor sich im Betrieb darauf beschränken kann, eine Änderung der eingelernten Bedingungen zu erkennen. Eine solche Änderung ist sicherer, schneller und mit weniger Aufwand detektierbar.

Vorteilhafterweise ist die Auswertungseinheit dafür ausgebildet, eine Entfernungsänderung erst dann anzunehmen, wenn die aus einer Vielzahl von Histogrammen bestimmten Werte der Lichtlaufzeit um einen Mindestwert häufiger eine Entfernungsänderung anzeigen als eine gleichbleibende Entfernung. Die Entscheidung aus einem einzelnen Histogramm kann immer noch durch Rauschen beeinflusst und damit falsch sein. Indem eine größere Anzahl von positiven Entscheidungen zusammenkommen muss, wird die Sicherheit erhöht, dass die Entfernungsänderung richtig erkannt wird.

In einer weiteren vorteilhaften Ausführungsform weist der Vorverarbeiter Folgendes auf:
- einen Verstärker, insbesondere einen Transimpedanzverstärker, zur Verstärkung des Signals und/oder
- einen Filter, insbesondere einen Bandpassfilter oder Differenzierer, zur Umwandlung des zunächst unipolaren elektrischen Signals in ein bipolares Signal und/oder
- einen Begrenzungsverstärker zur Verstärkung des positiven bzw. negativen Anteils des Signals bis auf einen Sättigungswert.

Der von dem Lichtempfänger in ein elektrisches Signal umgewandelte Lichtpuls ist schwach und sollte daher vor der weiteren Auswertung verstärkt werden. Gleichzeitig kann der Transimpedanzverstärker eine DC-Komponente ausfiltern, also eine nicht modulierte Grundhelligkeit, die sicher kein Lichtpuls ist. Der Bandpassfilter oder Differenzierer ist eine Ausgestaltung des analogen Vorverarbeiters, der dass zunächst unipolare elektrische Signal, das ja aus notwendig unipolarem Licht entsteht, in ein bipolares Signal umwandelt. Der Begrenzungsverstärker schließlich treibt das Signal in die Sättigung, damit es bei der anschließenden Schwellbewertung in dem Binarisierer in jedem Fall erkannt wird.

Vorteilhafterweise sind die digitalen Elemente des Sensors auf einem digitalen Baustein, beispielsweise in programmierbarer Logik, in ASIC oder auf einem FPGA (Field Programmable Gate Array) implementiert. Diese Implementierung ist schnell genug, um die hohe erforderliche zeitliche Präzision für die Lichtlaufzeit mitzubringen. Unter digitalem Baustein soll hier und im Folgenden jegliche konfigurierbare digitale Auswertung gemeint sein, die durch Vorkonfiguration der digitalen Verschaltung des Bausteins auf die Anwendung angepasst ist, statt wie bei einem echten Mikroprozessor durch Ablauf eines Programms auf einer universellen Auswertungseinheit zu erfolgen. Die derzeit bevorzugte Variante einer solchen programmierbaren Logik ist ein FPGA. Deshalb wird im Folgenden mehrfach von FPGA stellvertretend für die genannte Familie von digitalen Bausteinen gesprochen, die Erfindung ist aber darauf nicht beschränkt. Das ist zugleich gegenüber einem Mikroprozessor kostengünstig und dennoch ausreichend flexibel für die möglichen Anwendungen.

Bevorzugt weist die Auswertungseinheit einen Speicher auf, um die Laufzeit bis zu einer bekannten Entfernung eines Eichziels zu halten. Die gemessene Laufzeit beinhaltet neben dem externen Messpfad, also der eigentlichen Lichtlaufzeit, auch einen Anteil, der von den internen Laufzeiten der elektrischen Signale herrührt. Um diese internen Laufzeiten weicht die der gemessenen Laufzeit entsprechende Entfernung von der tatsächlichen Entfernung ab. Über das Eichziel kann diese konstante interne Laufzeit berücksichtigt werden und ermöglicht somit dem Sensor, nicht nur Entfernungsänderungen, sondern auch absolute Entfernungen zu messen.

In einer weiteren vorteilhaften Ausführungsform ist die Auswertungseinheit für eine Bestimmung des Empfangspegels insbesondere als Maximum über ein oder mehrere Histogramme ausgebildet. Dieser Empfangspegel ist per se interessant, beispielsweise um anzuzeigen, ob der Sensor unter den gegebenen Verhältnissen ordnungsgemäß arbeiten kann. Außerdem kann er verwendet werden, um die Genauigkeit der Bestimmung des Empfangszeitpunkts zu erhöhen, beispielsweise durch Anpassung entsprechender Bewertungsschwellen.

In vorteilhafter Weiterbildung sind die digitalen Elemente des Sensors auf einem digitalen Baustein wie einem FPGA implementiert, der zusätzlich eine digitale Temperaturregelungseinrichtung aufweist, die für eine Temperaturregelung ausgebildet ist, bei welcher in einem Temperaturkompensationszyklus zum Zeitpunkt der Erzeugung des Einzellichtpulses ein elektrisches Temperaturtestsignal über eine Leiterschleife aus dem digitalen Baustein hinaus- und wieder hineingeführt wird und das Aussenden des Einzellichtpulses um eine zeitliche Abweichung zwischen gemessenem und erwartetem Ankunftszeitpunkt des Temperaturtestsignals verzögert wird. Die Auswertung in dem FPGA benötigt nämlich soviel Leistung, dass dieses FPGA selbst zu einem erheblichen Teil zu der Betriebswärme des Sensors beiträgt. Dies führt zu einer Verfälschung bei der Messung der Lichtlaufzeit, die auf diese Weise kompensiert werden kann.

Dabei ist bevorzugt der Sensor für eine Ausführung des Temperaturkompensationszyklus jeweils nach einer Vielzahl von ausgesandten Einzellichtpulsen ausgebildet, insbesondere aller Einzellichtpulse, die ein Histogramm bilden. Die Erwärmung des FPGA oder des Sensors ist im Verhältnis zu den Messzyklen langsam. Somit genügt es und spart Auswertungsaufwand, die Temperaturkompensation mit dagegen herabgesetzter Frequenz vorzunehmen.

Vorteilhafterweise weist der Sensor eine Störkompensationseinrichtung auf, welche die Zeitintervalle zwischen den Einzellichtpulsen um eine systematische und/oder eine zufällige Verschiebung variieren kann, wobei die Auswertungseinheit dafür ausgebildet ist, die Verschiebung zu berücksichtigen. Neben den eigentlichen Rauschquellen, wie Umgebungslicht, gibt es auch systematische Fehlerquellen, welche die Signale stören können. Dazu zählen weitere Reflexionen des ausgesandten Einzellichtpulses, die nicht von dem eigentlich zu vermessenden Ziel stammen, aber auch Einzellichtpulse anderer Sensoren. Derartige Störungen werden durch die angegebene Verschiebung über das ganze Messfenster verschmiert und fallen so nicht oder kaum ins Gewicht.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: ein schematisches Blockschaltbild einer Ausführungsform der Erfindung;
- Fig. 2: eine schematische Darstellung der Signale in unterschiedlichen Verarbeitungsstadien zur Erläuterung des erfindungsgemäßen Auswertungsverfahrens;
- Fig. 3: eine schematische Darstellung gemäß Fig. 2 zur Erläuterung der Einstellung des Messfensters;
- Fig. 4: eine erläuternde Darstellung zur Erkennung einer Entfernungsänderung durch den Sensor;
- Fig. 5: ein schematisches Blockschaltbild einer weiteren Ausführungsform der Erfindung mit einer Temperaturkompensation;
- Fig. 6: eine schematische Darstellung der zu einem Histogramm zusammengeführten Lichtpulse zur Erläuterung der Störkompensation durch zusätzliche Verzögerungen; und
- Fig. 7: eine schematische Darstellung eines optoelektronischen Sensors zur Entfernungsbestimmung.

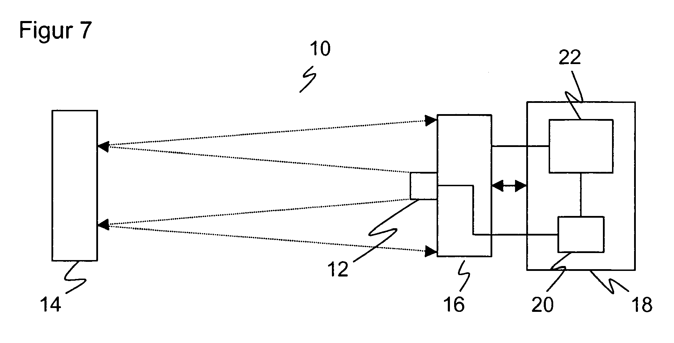

Figur 7 zeigt einen sehr vereinfacht dargestellten optoelektronischen Entfernungsmesser oder Sensor 10, der über einen Lichtsender 12 einen Lichtpuls zu einem Reflektor oder einem reflektierenden Zielobjekt 14 sendet. Der dort reflektierte oder remittierte Lichtstrahl kehrt zu einem Lichtempfänger 16 zurück, der den Lichtsender 12 umgibt. Weil sich der Lichtstrahl auf seinem Weg aufweitet, verdeckt der Lichtsender 12 nur einen kleinen und unerheblichen Teil des reflektierten Lichts. Natürlich kann man alternativ auch andere bekannte Lösungen einsetzen, wie einen Strahlteiler oder Pupillenteilung.

Lichtsender 12 und Lichtempfänger 16 werden von einer Steuerung 18 angesteuert und ausgewertet. Die Steuerung 18 veranlasst den Lichtsender 12, einzelne Lichtpulse zu einer bekannten Zeit auszusenden. Der Aussendezeitpunkt kann durch eine Verzögerungseinrichtung 20, beispielsweise wie in der deutschen Patentanmeldung DE 10 2006 047 778.2 desselben Anmelders beschrieben, mit hoher zeitlicher Präzision im Bereich einiger 10 Pikosekunden variiert werden.

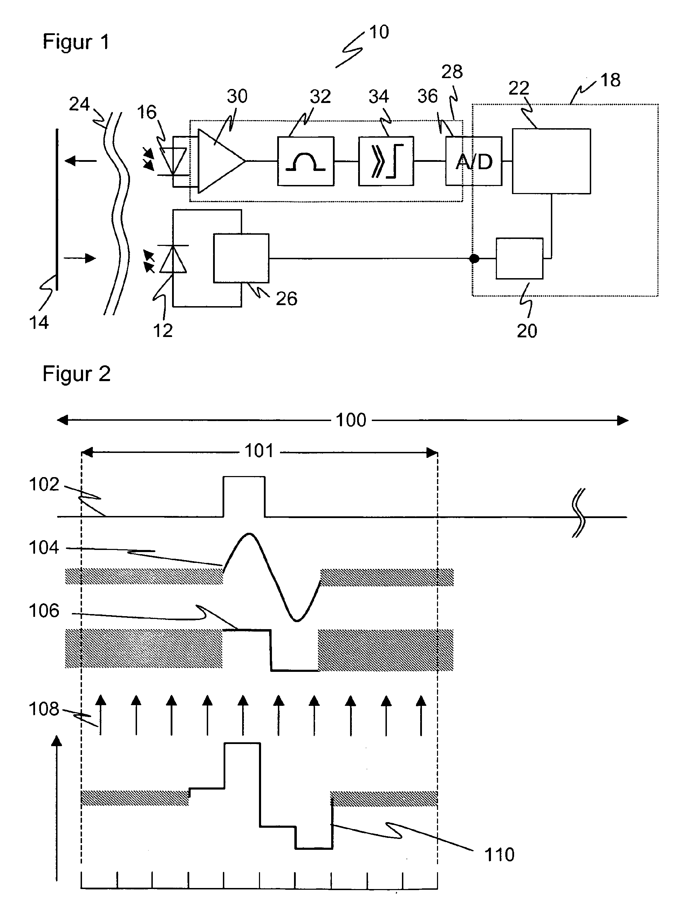

In einer Auswertungseinheit 22 bestimmt die Steuerung 18 den Empfangszeitpunkt des Lichtpulses in dem Lichtempfänger 16 in einer im Folgenden zu den Figuren 1-6 beschriebenen Weise. Aus dem Empfangszeitpunkt errechnet sich mit dem bekannten Aussendezeitpunkt die Lichtlaufzeit, die wiederum über die Lichtgeschwindigkeit der Entfernung des Zielobjekts 14 entspricht. Dabei sind zumindest zwei Modi möglich: In einem Modus wird die Lichtlaufzeit und damit die Entfernung absolut gemessen. In einem anderen Modus wird eine bestimmte Entfernung eingelernt, beispielsweise zu einem festen kooperativen Ziel, und überwacht, ob sich dessen Abstand ändert.

Der Sensor 10 kann ein optoelektronischer Taster oder Entfernungsmesser sein. Denkbar ist auch eine Reflexionslichtschranke, also eine Lichtschranke mit einem Lichtsender und einem gegenüber angeordneten Reflektor, wobei eine Unterbrechung des dort reflektierten Strahls detektiert wird. Durch die Messung der Entfernung oder der Änderung der Entfernung dieses Reflektors kann überwacht werden, ob der Reflektor noch am erwarteten Ort steht. Alle genannten Sensoren können auch als Schalter arbeiten, indem ein Schaltereignis bei Detektion eines Objekts in einer bestimmten Entfernung oder bei Abweichung von einer erwarteten Entfernung ausgelöst wird.

Der Sensor 10 ist in Figur 1 nochmals dargestellt. Dabei sind gleiche Merkmale hier und im Folgenden mit gleichen Bezugszeichen bezeichnet. Als Lichtsender ist hier beispielhaft eine Halbleiterlichtquelle 12 dargestellt, etwa ein Laser oder eine Leuchtdiode, als Lichtempfänger beispielhaft eine Photodiode 16. Grundsätzlich ist statt einer Photodiode 16 jeder Empfänger geeignet, der ein Lichtsignal in ein elektrisches Signal umwandeln kann. Das Zielobjekt 14 ist für gewöhnlich im Maßstab der Figur 1 weiter entfernt, wie durch gebrochene Linien 24 angedeutet ist.

Die Steuerung ist in dieser Ausführungsform als FPGA (Field Programmable Gate Array) 18 implementiert. Denkbar ist, wie oben schon diskutiert, auch eine andere Implementierung etwa mittels ASIC oder eines anderen digitalen Baussteins. In Bezug auf Kostenaufwand, Flexibilität und Geschwindigkeit ist aber einem FPGA der Vorzug zu geben. Die Steuerung 18 weist die eigentliche Auswertungseinheit 22 und die damit verbundene Verzögerungseinrichtung 20 auf, die ebenfalls in ihren digitalen Komponenten auf dem FPGA 18 implementiert sind. Die Anschlüsse des FPGA 18 sind differentiell ausgeführt, um die Signale genauer und sicherer übertragen zu können.

Der Sensor 10 hat einen Sendepfad, zu dem neben dem eigentlichen Lichtsender 16 noch ein Lasertreiber 26 und die Verzögerungseinrichtung 20 gehört, sowie einen Empfangspfad, zu dem die Photodiode 12 gehört, die über einen analogen Vorverarbeiter 28 das digitalisierte Empfangssignal der Auswertungseinheit 22 zuführt.

Der analoge Vorverarbeiter 28 bildet einen mehrstufigen Verarbeitungspfad. Dieser beginnt mit einem Verstärker 30, etwa einem Transimpedanzverstärker, der das Signal der Photodiode 16 annimmt und verstärkt. Ein nachgeschalteter Filter 32, der beispielsweise ein Bandpassfilter oder ein Differenzierer sein kann, wandelt das unipolare Lichtpulssignal in ein bipolares Signal um. Als nächste Vorverarbeitungsstufe ist ein Begrenzungsverstärker vorgesehen, der die Amplitude so weit verstärkt und anschließend abschneidet, dass das Lichtpulssignal zu einem in die Sättigung getriebenen Rechteckpuls wird. Dieses Signal wird als letzte Stufe einem A/D-Wandler 36 zugeführt, insbesondere einem Binarisierer, der die Amplitude nicht in einen digitalen Zahlenwert, sondern lediglich in einen Binärwert umwandelt. Der A/D-Wandler 36 ist bevorzugt kein eigener Baustein, sondern über die Eingänge des FPGA 18 realisiert.

Der vollständige Signal- und Auswertungspfad in dem Sensor 10 durch die soeben beschriebenen Komponenten des Sensors 10 wird nunmehr mit Hilfe von Figur 2 beschrieben.

Der Lichtsender 16 erzeugt in jeder Messperiode 100 jeweils einen Lichtpuls, der die Bestimmung eines präzisen Zeitpunkts ermöglicht. Dafür eignet sich ein Rechteckpuls, es sind aber auch andere Pulse, wie beispielsweise Gausspulse, vorstellbar. Der Aussendezeitpunkt wird der Auswertungseinheit 22 verfügbar gemacht oder dort erzeugt und kann mittels der Verzögerungseinrichtung 20 mit einer Präzision im Bereich von wenigen 10 Pikosekunden verzögert werden.

Der Lichtpuls wird in dem Überwachungsbereich des Sensors 10 an dem Zielobjekt 14 reflektiert oder remittiert und dann in dem Lichtempfänger 12 in ein elektrisches Signal umgewandelt. Anschließend wird das elektrische Signal in dem Verstärker 30 verstärkt. Das entstehende verstärkte elektrische Signal 102 ist idealisiert dargestellt, unter realistischen Bedingungen wäre der empfangene Lichtpuls 102 kein sauberes Rechteck, sondern verrauscht und verschmiert.

Der Sensor 10 detektiert den Lichtpuls nur, wenn er innerhalb eines zeitlichen Messfensters 101 auf den Lichtempfänger 12 trifft. Die Messperiode 100 liegt in der Größenordnung von einer Mikrosekunde, das entspricht einem Lichtweg von ungefähr 150 m. Das Messfenster 101 deckt nur einen kleinen Bereich dieser Messperiode 100 ab, beispielsweise 25 ns oder ca. 3,7 m. Grundsätzlich kann das Messfenster 101 auch breiter sein, es erfordert dann aber einen höheren Auswertungs - und Speicheraufwand, wenn der Empfangszeitpunkt innerhalb des Messfensters 101 mit hoher zeitlicher Präzision bestimmt werden soll.

Um sicherzustellen, dass der Lichtpuls innerhalb des Messfensters 101 empfangen wird, sind verschiedene Strategien möglich. Die Einfachste ist, das Messfenster zu Beginn unmittelbar an den Anfang der Messperiode zu setzen, was dann einem Entfernungsmessbereich direkt vor dem Sensor 10 entspricht. Wenn dort kein Lichtpuls empfangen wird, wird das Messfenster 101 sukzessive um seine eigene Länge nach vorn verschoben, bis der Lichtpuls innerhalb des Messfensters 101 empfangen wird. Ein etwas schnellerer Algorithmus ist eine Intervallschachtelung, bei der die Breite des Messfensters 101 zunächst groß genug gewählt wird, um den gesamten denkbaren Entfernungsmessbereich abzudecken und dann mithilfe der aufgrund der hohen Breite des Messfensters 101 noch groben Entfernungsinformation die Lage eines halb so breiten Messfensters 101 für den nächsten Iterationsschritt zu wählen. Es ist aber jeder bekannte Algorithmus denkbar, um ein schmales Messfenster 101 von beispielsweise 25 ns zu finden, innerhalb dessen der Lichtpuls empfangen wird. Vorausgesetzt ist hierbei, dass das Zielobjekt 14 soweit statisch ist, dass eine hinreichende Anzahl von Messperioden in derjenigen Zeit liegt, die das Zielobjekt 14 braucht, um sich um eine Entfernung innerhalb der Messgenauigkeit zu bewegen.

Das verstärkte elektrische empfangene Lichtpulssignal ist aufgrund der Natur des Lichtes immer ein unipolares Signal. In dem Filter 32 wird es zu einem bipolaren Signal 104 umgewandelt. Dies kann mit einem Bandpassfilter realisiert werden, der erzeugte Signalverlauf 104 entspricht aber zumindest näherungsweise der gedehnten Ableitung des verstärkten Signals 102. In der Figur 2 sind neben dem bipolaren Signal 104 graue Rechtecke dargestellt, die den Rauschpegel symbolisieren sollen. Zu beachten ist erneut eine Idealisierung: Es ist nur eine Sinusschwingung des bipolaren Signals 104 dargestellt. In der Praxis treten aber meist Nachschwingungen auf, also weitere Sinusperioden mit zunehmend gedämpfter Amplitu de. Selbstverständlich ist auch kein reiner Sinus, jedoch eine Kurve mit Maximum und Minimum zu erwarten.

In dem Begrenzungsverstärker 34 wird das bipolare Signal 104 so weit verstärkt und abgeschnitten, dass das eigentliche Signal zu einer Rechteckflanke 106 wird und der durch graue Rechtecke dargestellte Rauschpegel in seiner Amplitude über den gesamten Dynamikbereich gedehnt wird.

Die Rechteckflanke 106 wird in dem Binarisierer 36 mit einer Abtastrate von beispielsweise 2,5 ns abgetastet. Diese Abtastrate ist in der Figur 2 durch Pfeile 108 symbolisiert. Die entstehende Bitfolge, bei den angegebenen Zahlenwerten je 1 Bit pro 2,5 ns, also 10 Bit für das gesamte Messfenster 101, wird in der Auswertungseinheit 22 verwendet, um ein Histogramm 110 zu bilden. Dafür ist für jedes Bin ein Akkumulator vorgesehen, der nur bei einem zugehörigen Bitwert "1" heraufgezählt wird.

Bei idealen, unverrauschten Signalen würde in diesem Histogramm nur dasjenige Bin gefüllt, über dem die Rechtflanke 106 liegt. Der von dem Begrenzungsverstärker 34 angehobene Rauschpegel füllt aber auch die übrigen Bins, und zwar wegen der Zufälligkeit des Rauschens im Erwartungswert etwa in jeder zweiten Messperiode 100.

Wird das soeben beschriebene Verfahren iteriert und das Histogramm 108 über n Messperioden 100 gebildet, so sind die Bins durch das Rauschen ungefähr mit dem Wert n/2 gefüllt, wobei statistische Schwankungen hinzukommen. Dieser Wert n/2 entspricht aufgrund der Binarisierung dem Signalwert Null. Daraus erhebt sich nach oben das durch den positiven Teil des bipolaren Signals 104 gebildete Maximum und nach unten das entsprechende Minimum heraus. Dieses Maximum und Minimum verwendet die Auswertungseinheit 22, um den Empfangszeitpunkt des Lichtpulses zu bestimmen, in einer noch zu beschreibenden besonderen Weise.

Es wäre nämlich ungenau, unmittelbar das Maximum oder das Minimum zu detektieren. Je nach Messbedingungen kann der Empfangspegel des Sensors 10 erheblich schwanken, so dass eine Schwellbedingung an die Lage der Extrema von dem Empfangspegel abhängt. Damit ist keine Messung möglich, deren Präzision auch nur die Breite der Bins des Histogramms 110 erreicht, geschweige denn Bruchteile davon.

Wenn stattdessen der Übergang detektiert wird, also der Nulldurchgang, der ja wegen der Binarisierung bei n/2 liegt, so entfällt diese Abhängigkeit vom Empfangspegel. Dieser Übergang liegt nämlich unabhängig von der Intensität immer am selben Zeitpunkt.

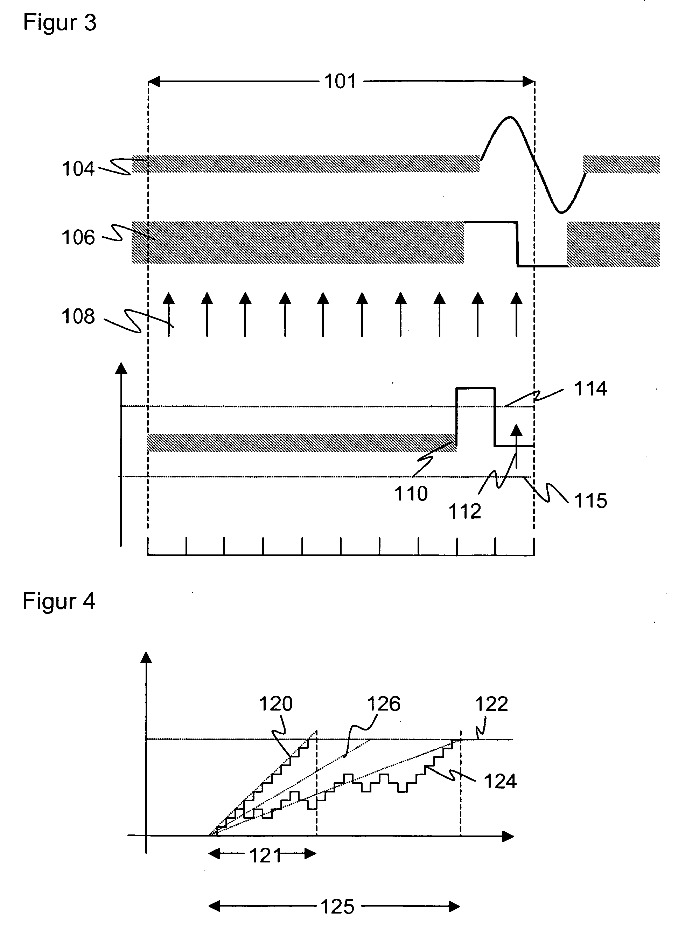

Statt den Übergang, also dasjenige Bin des Histogramms 110 direkt aufzufinden, in dem der Nulldurchgang liegt, wird nun wie im Zusammenhang mit der Figur 3 beschrieben vorgegangen. Durch Feineinstellung der Verzögerungseinrichtung 20 wird der Lichtpuls innerhalb des Messfensters 110 mittels der Verzögerungsschaltung 20 so verschoben, dass der Übergang 112 gerade am Rande des Messfensters 101 liegt.

Der Übergangspunkt ist dann durch eine dreifache Bedingung beschrieben. Zum einen muss das letzte Bin gerade dem Signalwert Null entsprechen, wegen der zuvor erfolgten Binarisierung entspricht dies dem Histogrammwert n/2. Zweitens sollte vor dem Nulldurchgang das Maximum liegen, um den Nulldurchgang von einem zufällig mit n/2 gefüllten Bin zu unterscheiden. Dies ist erfüllt, wenn das vorletzte Bin mit einem Wert oberhalb eine Schwelle 114 gefüllt ist, die sich signifikant über den Rauschpegel erhebt. Drittens könnte der so aufgefundene Nulldurchgang noch derjenige einer Nachschwingung und nicht der gesuchten ersten Schwingung sein. Deshalb muss noch ausgeschlossen sein, dass irgend eines der vorherigen Bins mit einem Wert unterhalb einer Schwelle 115 gefüllt ist, die signifikant unterhalb des Rauschpegels liegt. Ein solches Minimum könnte nämlich nur von einer Schwingung höherer Ordnung ausgelöst sein, die aber nicht zeitlich vor der gesuchten Hauptschwingung liegen kann.

Solange die dreifache Übergangsbedingung nicht erfüllt ist, wird die Feineinstellung weiter durchgefahren. Ist die dreifache Übergangsbedingung erreicht, so liegt der rechte Rand des Messfensters 101 an der dem Empfangszeitpunkt des Lichtpulses entsprechenden Stelle. Aus der Verzögerung, welche die Verzögerungseinrichtung 20 dafür erzeugen musste, lässt sich dann die Lichtlaufzeit ablesen.

Wenn der Sensor 10 in seinem ersten Modus die Entfernung absolut bestimmen soll, muss das soeben beschriebene Verfahren für eine Entfernungsbestimmung vollständig ablaufen. Die gemessene Laufzeit des Pulses entspricht immer noch nicht der reinen Lichtlaufzeit, sondern enthält Komponenten für die interne Signal verarbeitung. Um diese herauszurechnen, wird der Sensor 10 zur Eichung beispielsweise auf ein Zielobjekt 14 einer wohl bekannten Entfernung gerichtet. Aus der Differenz zwischen gemessener Laufzeit und der von dem Licht für die bekannte Entfernung benötigten Zeit kann der Sensor 10 damit auf absolute Entfernungen geeicht werden.

In dem zweiten Modus, in dem nur eine Entfernungsänderung zu detektieren ist, wird das Verfahren nur einmal in einem Einlernmodus angewendet, um die Entfernung des überwachenden Zielobjekts 14 einzustellen. Eine Entfernungsänderung wird dann dadurch detektiert, dass die so eingestellte dreifache Übergangsbedingung nicht mehr vorliegt.

Es ist immer noch denkbar, dass die dreifache Übergangsbedingung im Einzelfall ohne Entfernungsänderung des zu überwachenden Objekts erfüllt wird. Deshalb wird, wie Fig. 4 erläutert, die gesamte beschriebene Histogrammauswertung ständig wiederholt. Jede Feststellung einer Entfernungsänderung wird als "1", jede Feststellung einer gleichbleibenden Entfernung mit "-1" bewertet. Kumuliert man eine Vielzahl von Histogrammauswertungen, so entsteht die Kurve 120, wenn die Entfernung sich wirklich verändert hat und das System von Störungen unbeeinflusst ist. Ein Schaltereignis wird erst dann ausgelöst, wenn eine hinreichende Anzahl von Histogrammauswertungen eine Entfernungsänderung detektiert hat. Dann nämlich steigt die kumulierte Kurve 120 über die Schwelle 122. Die zugehörige minimale Schaltzeit 121 hängt dann nur von der Schwelle 122 ab. Ist dagegen der Signalpfad verrauscht, so steigt die entsprechende Kurve 124 langsamer an und benötigt eine Schaltzeit von 125. Die Kurve 126 illustriert einen mittleren Fall zwischen den Kurven 120 und 122. Wenn das Objekt seine Entfernung gar nicht geändert hat, überschreiten die Kurven die Schaltschwelle möglicherweise auch gar nicht, sondern fallen statistisch wieder auf den Grundpegel ab. Das ganze entspricht einem digitalen Tiefpass der Bewertung der Entfernungsänderung.

Das Messfenster 101 ist erkennbar nicht auf 25 ns beschränkt, bei einem größeren Messfenster 101 müssen aber, soll die zeitliche Präzision der Binbreite aufrechterhalten bleiben, mehr Bins vorgesehen werden, was einen erhöhten Aufwand an Auswertung und vor allem Speicher bedeutet.

Es ist vorstellbar, anstelle eines Binarisierers 36 einen A/D-Wandler einzusetzen, der nicht nur Bitwerte, sondern echte Zahlenwerte liefert. Die beschriebene Histogrammbildung entspricht dann einer Mittelung über n Messperioden 100, bei der sich das Rauschen herausmittelt und der Nulldurchgang des Mittelwerts als Übergangspunkt behandelt wird.

Das Histogramm 110 enthält über seine Amplitude, also dem Füllstand der Bins, auch eine Information über den Empfangspegel. Diese kann beispielsweise verwendet werden, um die Empfangsbedingungen des Sensors 10 zu prüfen oder anzuzeigen, aber auch, um die Schwelle 114 für die Bewertung der Übergangsbedingung 112 festzulegen oder zu korrigieren. Mögliche Maße für den Empfangspegel sind das Maximum des Histogramms 110 über eine große Anzahl von Messperioden 101 oder auch das gemittelte Integral unter demjenigen Anteil des Histogramms 110, der sich über oder unter den Rauschpegel erhebt.

Statt des bipolaren Signals 104 kann auch, unter Weglassung des Filters 32, ein unipolares Signal ausgewertet werden. Diese Auswertung ist aber wegen der Abhängigkeit von der Empfangsintensität weniger genau.

In einer Ausführungsform mit erhöhter Auflösung wird die Verzögerungseinrichtung in einer besonderen Weise angesteuert. Die tatsächliche Verzögerung 20, welche die Verzögerungseinrichtung bei Ansteuerung mit einer gewünschten Verzögerung erzeugt, ist nämlich aufgrund von elektrischen Signalstörungen wie Hystereseverhalten, Restladungen, Übersprechen oder dergleichen nicht streng identisch zu der gewünschten Verzögerung. Es treten deshalb dynamisch Nichtlinearitäten zwischen gewünschter und tatsächlicher Verzögerung auf. Dieser Effekt lässt sich abmildern, indem statt der eigentlich gewünschten Verzögerung ein Wert in deren Nähe gewählt wird. Da eine Vielzahl von Lichtpulsen gemeinsam den Messwert der Lichtlaufzeit bestimmt, können diese gezielten Abweichungen nacheinander von der gewünschten Verzögerung um den eigentlich gewünschten Wert herum ausgemittelt gewählt werden. In der Auswertung spielt nur dieser Mittelwert eine Rolle, dessen Präzision wird auf diese Weise also nicht gemindert. Die Nichtlinearitäten in der Beziehung gewünschter zu tatsächlicher Verzögerung werden aber statistisch verschmiert und verfälschen die Messung in deutlich herabgesetztem Maße.

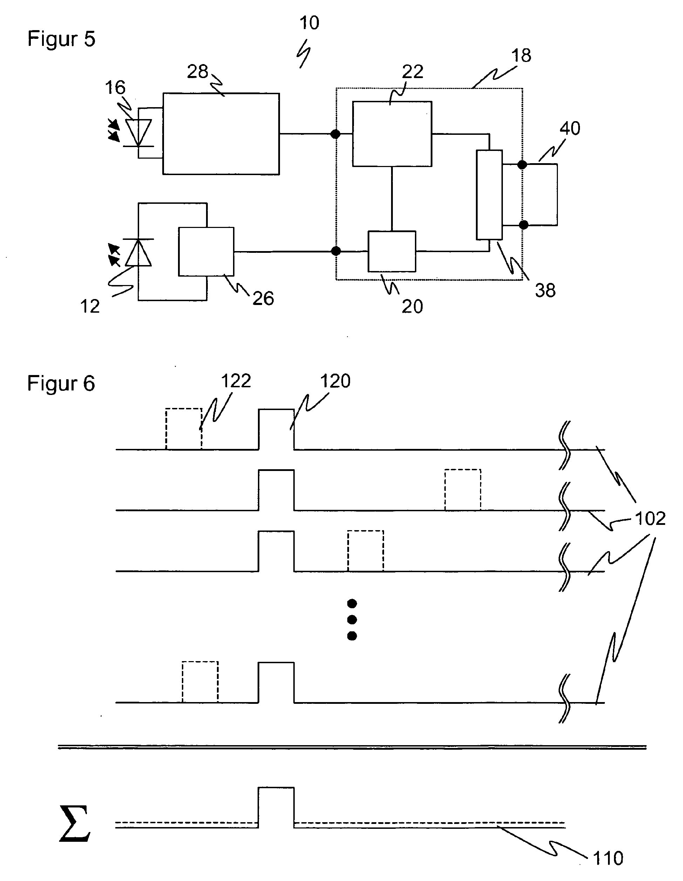

Figur 5 zeigt eine weitere Ausführungsform des Sensors 10 mit einer Temperaturkompensation. Es zeigt sich, dass das FPGA 18 für den Großteil der Wärmeent wicklung in dem Sensor 10 verantwortlich ist. Es ergeben sich dann temperaturabhängige Laufzeitdifferenzen, die mit der zu messenden Entfernung nichts zu tun haben und für die daher kompensiert werden soll. Die in Figur 5 dargestellten Elemente des Sensors 10 entsprechen denen der Figur 1 bis auf die zusätzlich vorgesehene Temperaturregelungseinrichtung 38, die sowohl mit der Auswertungseinheit 22 als auch der Verzögerungseinrichtung 20 verbunden ist und zu der eine Leiterschleife 40 gehört, die von der Temperaturregelungseinrichtung 38 aus dem FPGA 18 hinaus- und wieder hineingeführt ist.

Die Temperaturregelungseinrichtung 38 erhält von der Auswertungseinheit 22 den Aussendezeitpunkt eines Lichtpulses. Mit diesem Zeitpunkt schickt die Temperaturregelungseinrichtung 38 ein elektrisches Signal über die Leiterschleife 40, das sie selbst wieder empfängt. Dieses elektrische Signal passiert dabei baugleiche Aus- und Eingänge des FPGAs 18 wie der eigentliche Messpuls und unterliegt daher demselben Temperaturverhalten. Die Temperaturregelungseinrichtung 38 erwartet das elektrische Signal aus der Leiterschleife 40 zu einem bestimmten Zeitpunkt, der eingelernt sein kann oder der einer Laufzeit des elektrischen Signals auf der Leiterschleife 40 bei bekannter Temperatur entspricht, etwa derjenigen kurz nach dem Einschalten des Sensors 10. Ist das elektrische Signal aus der Leiterschleife 40 schneller oder langsamer als erwartet, so regelt die Temperaturkompensationseinrichtung 38 die Verzögerung der Verzögerungseinrichtung 20 entsprechend. Somit ist derjenige Anteil der internen Laufzeit, der auf der Temperaturabhängigkeit beruht, für den ausgesandten Lichtpuls korrigiert.

Die Temperaturkompensation findet also in einem einfachen Regelkreis statt, der ein Zweipunktregler sein kann. Die Stellgröße, nämlich der elektrische Sendepuls über die Leiterschleife 40, beeinflusst hierbei das Stellglied, nämlich die Verzögerungseinrichtung 20, durch ein Erhöhen oder Erniedrigen der Verzögerung des eigentlichen Messepulses des Lichtsenders 16. Dabei muss die Temperaturregelung nicht mit jeder Messperiode 101 vorgenommen werden. Es ist beispielsweise denkbar, sie nach jeweils n Iterationen einzuschieben, wenn ein Histogramm 110 vervollständigt ist und ein Messwert ausgegeben wird.

Eine Weiterbildung der Erfindung ist in der Figur 6 veranschaulicht. Neben den oben diskutierten Rauscheinflüssen durch diffuse Störstrahlung wie derjenigen des Umgebungslichtes oder anderer Lichtquellen können auch systematische Fremdstörer auftreten. Dabei handelt es sich zum einen um Reflexionen des von dem Licht sender 16 ausgesandten Lichtpulses, die nicht von dem Zielobjekt 14 stammen, also Mehrfachreflexionen, aber auch Echos dieser Lichtpulse, also Überlagerungen des aktuellen Lichtpulses mit dem einer vorhergehenden Messperiode 100. Liegt beispielsweise das Zielobjekt 14 in einer Entfernung von 10 m, so kann etwa die Wand einer Lagerhalle in einer Entfernung von 160 m, also gerade in einer der Messperiode 100 entsprechenden Zusatzentfernung von 150 m, zu dem Empfang eines Lichtpulses im selben Messfenster 101 führen. Eine dritte Klasse von Störern sind baugleiche Sensoren.

Um zu verhindern, dass derartige Fremdstörer ausgewertet werden, verzögert die Verzögerungseinrichtung 20 den ausgesandten Lichtpuls in jeder Messperiode um einen systematischen und/oder einen zufälligen Anteil. Diese Verzögerung ist der Auswertungseinheit 22 bekannt, so dass sie vor der Bildung des Histogramms unmittelbar herausgerechnet werden kann.

In der Figur 5 sind eine Reihe von Messperioden dargestellt, in denen der eigentliche Messpuls 120 (durchgezogene Linie) von dem Störpuls 122 (gestrichelte Linie) eines Fremdstörers überlagert ist. Entgegen der Darstellung wandert eigentlich nicht der Störpuls, sondern der Messpuls durch die zusätzliche Verzögerung. Die Auswertungseinrichtung 22 kennt aber diese Verzögerungen und korrigiert die Position des Messfensters 101, so dass die Messpulse wie dargestellt übereinanderliegen. Zu beachten ist, dass zusätzliche Rauscheinflüsse für die vereinfachte Betrachtung nicht dargestellt sind; die glatten dargestellten Signallinien sind eigentlich verrauscht.

Ohne die zusätzliche Verzögerung würden sich auch die Störpulse 122 immer an derselben Stelle im Histogramm 110 aufaddieren und damit die Messung verfälschen. Aufgrund der zusätzlichen Verzögerung liegen aber die Störpulse 122 nicht übereinander und addieren sich, wie im unteren Teil der Figur 6 durch eine Summenbildung angedeutet, nur zu einem zusätzlichen Rauschpegel. Durch den zusätzlichen systematischen und/oder zufälligen zeitlichen Versatz wird der Einfluss von Fremdstörern über eine Gleichverteilung auf das Messfenster 101 reduziert.

Dabei dient die systematische Verzögerungskomponente dazu, statische Bedingungen, wie die Reflexion an einem anderen Objekt, auszuschalten, während die zufällige Komponente vor Fremdstörern schützt, die Pulse nach einem bestimmten Muster aussenden, insbesondere anderen baugleichen Sensoren.

Eine einfache Realisierung der Fremdlichtkompensation ist die Folgende. Wenn x die Soll-Länge der Messperiode 100 und y die Breite eines Bins des Histogramms 110 ist, dann werden Werte x-zy, x-(z-1)y, ..., x+(z-1)y, x+zy in einer zufälligen Reihenfolge für die variierten Längen der Messperiode 100 verwendet. Zu beachten ist dabei, dass z und n, also die Gesamtzahl der Messperioden, so gewählt werden sollte, dass jedes Bin im Erwartungswert denselben Rauschpegel auffängt. Andernfalls würde gerade die Fremdlichtkompensation eine systematische Fehlerkomponente erzeugen. Um dies sicherzustellen, kann auch ein Ziehen ohne Zurücklegen verwendet werden, so dass jeder variierte Wert gleich oft verwendet wird. Eine weitere systematische Komponente zusätzlich zu der beschriebenen zufälligen Komponente ist nach diesem Beispiel gar nicht mehr notwendig.

Mit dem beschriebenen Sensor 10 lässt sich kompakt auf einem digitalen Baustein wie einem FPGA eine kostengünstige miniaturisierte Lösung unter Ausnutzung von Standardbauteilen realisieren, die flexibel ist und eine zeitlich sehr genaue Messung auch unter widrigen Empfangsbedingungen eines Lichtpulses ermöglicht.

## Patentansprüche

1. Optoelektronischer Sensor (10) zur Messung einer Entfernung oder einer Entfernungsänderung aus einer Lichtlaufzeit, der Folgendes aufweist:
- einen Lichtsender (12) zum Aussenden einer Vielzahl von aufeinanderfolgenden Einzellichtpulsen,
- einen Lichtempfänger (16) zum Empfang der reflektierten oder remittierten Einzellichtpulse,
- eine digitale Auswertungseinheit (22), welche die Laufzeit der Einzellichtpulse zwischen Aussenden und Empfang und daraus mittels eines zeitlichen Histogramms (110) die Lichtlaufzeit bestimmt, und
- einen analogen Vorverarbeiter (28), welcher jeweils den in dem Lichtempfänger (16) empfangenen Einzellichtpuls zu einem bipolaren vorverarbeiteten Signal umwandelt und über einen A/D-Wandler (36) der digitalen Auswertungseinheit (22) zuführt,
**gekennzeichnet durch**
eine digitale Verzögerungsschaltung (20), um über den Lichtsender (12) Einzellichtpulse mit einer definierten Verzögerung auszusenden,
wobei die Auswertungseinheit dafür ausgebildet ist, die Lichtlaufzeit wie folgt zu bestimmen:
- Auffinden des vorverarbeiteten Signals in einem zeitlichen Messfenster (101), dessen Breite die Gesamtbreite des Histogramms (110) ist, **durch** systematische Grobverstellung der Verzögerung des Einzellichtpulses,
- Verschieben eines Übergangspunktes (112) von einem Maximum zu einem Minimum oder einem Minimum zu einem Maximum des vorverarbeiteten Signals an einen Beobachtungszeitpunkt in dem Messfenster (101), **durch** systematische Feinverstellung der Verzögerung des Einzellichtpulses, und
- Ermitteln der Lichtlaufzeit aus der erforderlichen Verzögerung.

2. Sensor (10) nach Anspruch 1,
der dafür ausgebildet ist, die digitale Verzögerungsschaltung (20) mit Verzögerungen anzusteuern, die Abweichungen um die definierte Verzögerung herum aufweisen und nur im Mittelwert der definierten Verzögerung entsprechen, um nichtlineares Verhalten der digitalen Verzögerungsschaltung (20) auszumitteln.

3. Sensor (10) nach Anspruch 1 oder 2,
wobei die Auswertungseinheit (22) dafür ausgebildet ist, den Übergangspunkt (112) bei der Feinverstellung der Verzögerung an den Rand des Messfensters (101) zu verschieben.

4. Sensor (10) nach einem der vorhergehenden Ansprüche,
wobei der Übergangspunkt (112) der erste Nulldurchgang von Maximum auf Minimum des vorverarbeiteten bipolaren Signals ist.

5. Sensor (10) nach einem der vorhergehenden Ansprüche,
wobei die Auswertungseinheit (22) für die Bestimmung des Empfangszeitpunkts in einer vorgeschalteten Lemphase und eine Auswertung auf Veränderung des Übergangspunktes (112) gegenüber dem eingelernten Empfangszeitpunkt im Betrieb ausgebildet ist, um eine Entfernungsänderung zu ermitteln.

6. Sensor (10) nach Anspruch 5,
wobei die Auswertungseinheit (22) dafür ausgebildet ist, eine Entfernungsänderung erst dann anzunehmen, wenn die aus einer Vielzahl von Histogrammen (110) bestimmten Werte der Lichtlaufzeit um einen Mindestwert häufiger eine Entfernungsänderung anzeigen als eine gleichbleibende Entfernung.

7. Sensor (10) nach einem der vorhergehenden Ansprüche,
wobei der Vorverarbeiter (28) Folgendes aufweist:
- einen Verstärker (30), insbesondere einen Transimpedanzverstärker, zur Verstärkung des Signals und/oder
- einen Filter (32), insbesondere einen Bandpassfilter oder Differenzierer, zur Umwandlung des zunächst unipolaren elektrischen Signals des Lichtempfängers (16) in ein bipolares Signal und/oder
- einen Begrenzungsverstärker (34) zur Verstärkung des positiven bzw. negativen Anteils des Signals bis auf einen Sättigungswert.

8. Sensor (10) nach einem der vorhergehenden Ansprüche,
wobei die digitalen Elemente (20, 22, 38) des Sensors auf einem digitalen Baustein, beispielsweise in programmierbarer Logik, in ASIC oder auf einem FPGA (18) implementiert sind.

9. Sensor (10) nach einem der vorhergehenden Ansprüche,
wobei die Auswertungseinheit (22) einen Speicher aufweist, um die Laufzeit bis zu einer bekannten Entfernung eines Eichziels zu halten.

10. Sensor (10) nach einem der vorhergehenden Ansprüche,
wobei die Auswertungseinheit (22) für eine Bestimmung des Empfangspegels insbesondere als Maximum über ein oder mehrere Histogramme (110) ausgebildet ist.

11. Sensor (10) nach einem der vorhergehenden Ansprüche,
wobei die digitalen Elemente (20, 22, 38) des Sensors auf einem digitalen Baustein wie einem FPGA (18) implementiert sind, der zusätzlich eine digitale Temperaturregelungseinrichtung (38) aufweist, die für eine Temperaturregelung ausgebildet ist, bei welcher in einem Temperaturkompensationszyklus zum Zeitpunkt der Erzeugung des Einzellichtpulses ein elektrisches Temperaturtestsignal über eine Leiterschleife (40) aus dem digitalen Baustein (18) hinaus- und wieder hineingeführt wird und das Aussenden des Einzellichtpulses um eine zeitliche Abweichung zwischen gemessenem und erwartetem Ankunftszeitpunkt des Temperaturtestsignals verzögert wird.

12. Sensor (10) nach Anspruch 11,
wobei der Sensor (10) für eine Ausführung des Temperaturkompensationszyklus jeweils nach einer Vielzahl von ausgesandten Einzellichtpulsen ausgebildet ist, insbesondere aller Einzellichtpulse, die ein Histogramm (110) bilden.

13. Sensor (10) nach einem der vorhergehenden Ansprüche,
wobei der Sensor (10) eine Störkompensationseinrichtung (20, 22) aufweist, welche die Zeitintervalle zwischen den Einzellichtpulsen um eine systematische und/oder eine zufällige Verschiebung variieren kann, wobei die Auswertungseinheit (22) dafür ausgebildet ist, die Verschiebung zu berücksichtigen.

14. Verfahren zur Messung einer Entfernung oder einer Entfernungsänderung aus einer Lichtlaufzeit eines Lichtpulses,
wobei nacheinander eine Vielzahl von Einzellichtpulsen ausgesendet wird und die Lichtlaufzeit aus einem zeitlichen Histogramm (110) der Laufzeiten zwischen Aussenden und Empfang der Einzellichtpulse bestimmt wird, und wobei die empfangenen Einzellichtpulse analog zu einem bipolaren vorverarbeiteten Signal umgewandelt und nach einer Binarisierung digital ausgewertet werden,
**dadurch gekennzeichnet,**
**dass** die Lichtlaufzeit wie folgt bestimmt wird:
- Auffinden des vorverarbeiteten Signals in einem zeitlichen Messfenster (101), dessen Breite die Gesamtbreite des Histogramms (110) ist, durch systematische Grobverstellung der Verzögerung des Einzellichtpulses,
- Verschieben eines Übergangspunkts (112) von einem Maximum zu einem Minimum oder einem Minimum zu einem Maximum des vorverarbeiteten Signals an einen Beobachtungspunkt in dem Messfenster (101), insbesondere den Rand des Messfensters, durch systematische Feinverstellung der Verzögerung des Einzellichtpulses, und
- Ermitteln der Lichtlaufzeit aus der erforderlichen Verzögerung.

15. Verfahren nach Anspruch 14,
wobei der Übergangspunkt (112) der erste Nulldurchgang von Maximum auf Minimum des vorverarbeiteten bipolaren Signals ist.

16. Verfahren nach Anspruch 14 oder 15,
wobei die digitale Auswertung auf einem digitalen Baustein, beispielsweise in programmierbarer Logik, in ASIC oder auf einem FPGA (18) implementiert wird.

17. Verfahren nach Anspruch 16,
wobei eine Regelung (38, 40, 20) für Temperaturschwankungen vorgenommen wird, bei welcher in einem Temperaturkompensationszyklus zum Zeitpunkt der Erzeugung des Einzellichtpulses ein elektrisches Temperaturtestsignal über eine Leiterschleife (40) aus dem digitalen Baustein (18) hinaus- und wieder hineingeführt wird und das Aussenden des Einzellichtpulses um eine zeitliche Abweichung zwischen gemessenem und erwartetem Ankunftszeitpunkt des Temperaturtestsignals verzögert wird.

18. Verfahren nach einem der Ansprüche 14 bis 17,
wobei die Zeitintervalle zwischen den Einzellichtpulsen für eine Störkompensation um eine systematische und/oder eine zufällige Verschiebung variiert werden.

## Claims

1. An optoelectronic sensor (10) for the measurement of a distance or a change in distance from a light time of flight, the sensor comprising
- a light transmitter (12) for transmitting a plurality of subsequent individual light pulses,
- a light receiver (16) for receiving the reflected or remitted individual light pulses,
- a digital evaluation unit (22) which determines the time of flight of the individual light pulses between transmission and reception and from that, by means of a time histogram (110), the light time of flight, and
- an analog preprocessor (28) which converts the respective individual light pulse received in the light receiver (16) into a bipolar preprocessed signal which is fed to the digital evaluation unit (22) via an A/D-converter (36),
**characterized by**
a digital delay circuit (20) for delaying individual light pulses via the light transmitter (12) with a defined delay, wherein the evaluation unit is configured to determine the light time of flight as follows:
- locating the preprocessed signal in a measurement time window (101), whose width is the total width of the histogram (110), by systematic coarse adjustment of the delay of the individual light pulses,
- moving a transition point (112) from a maximum to a minimum or a minimum to a maximum of the preprocessed signal to an observation point within the measurement time window (101) by systematic fine adjustment of the delay of the individual light pulses, and
- determining the light time of flight from the necessary delay.

2. The sensor (10) according to claim 1,
which is configured to control the digital delay circuit (20) with delays comprising deviations around the defined delay, the delays corresponding to the defined delay only in the mean value, in order to average out a non-linear behavior of the digital delay circuit (20).

3. The sensor (10) according to claim 1 or 2,
wherein the evaluation unit (22) is configured to move the transition point (112) during the fine adjustment to an end point of the measurement time window (101).

4. The sensor (10) according to any of the preceding claims,
wherein the transition point (112) is the first zero crossing from a maximum to a minimum of the preprocessed signal.

5. The sensor (10) according to any of the preceding claims,
wherein the evaluation unit (22) is configured for a determination of the reception point in time during a previous teach phase and an evaluation during operation for a change in the transition point (112) with respect to the taught reception point in time, in order to determine a change in distance.

6. The sensor (10) according to claim 5,
wherein the evaluation unit (22) is configured to assume a change in distance only after the values for the light time of flight determined from a plurality of histograms (110) show a change in distance by a minimum value more often than a constant distance.

7. The sensor (10) according to any of the preceding claims,
wherein the preprocessor (28) comprises the following:
- an amplifier (30), in particular a transimpedance amplifier, for amplifying the signal and/or
- a filter (32), in particular a band pass filter or a differentiator, for converting the electric signal of the light receiver (16) that at first is unipolar into a bipolar signal and/or
a limiting amplifier (34) for amplifying the positive and negative part of the signal, respectively, to a saturation value.

8. The sensor (10) according to any of the preceding claims,
wherein the digital elements (20, 22, 38) of the sensor are implemented on a digital device, such as a programmable logic device, an ASIC or an FPGA (18).

9. The sensor (10) according to any of the preceding claims,
wherein the evaluation unit (22) comprises a memory to store the time of flight to the known distance of a calibration target.

10. The sensor (10) according to any of the preceding claims,
wherein the evaluation unit (22) is configured to determine a reception level, in particular as a maximum from one or multiple histograms (110).

11. The sensor (10) according to any of the preceding claims,
wherein the digital elements (20, 22, 38) of the sensor are implemented on a digital device such as an FPGA (18) that additionally comprises a digital temperature control device (38) configured for a temperature control wherein, in a temperature compensation cycle, at the time of generating the individual light pulse an electric temperature test signal is sent via a wire loop (40) out of the digital device (18) and back into the digital device (18), and wherein the transmission of the individual light pulse is delayed by a time deviation between measured and expected arrival time of the temperature test signal.

12. The sensor (10) according to claim 11,
wherein the sensor (10) is configured to execute the temperature compensation cycle after a respective plurality of transmitted individual light pulses, in particular all individual light pulses forming a histogram (110).

13. The sensor (10) according to any of the preceding claims,
wherein the sensor (10) comprises an interference compensation device (20, 22) capable of varying the time intervals between the individual light pulses by a systematic and/or a random offset, and wherein the evaluation unit (22) is configured to consider the offsets.

14. A method for the measurement of a distance or a change in distance from a light time of flight of a light pulse,
wherein a plurality of individual light pulses is subsequently transmitted and the light time of flight is determined from a time histogram (110) of the time of flight between transmission and reception of the individual light pulses,
and wherein the received individual light pulses are converted to a bipolar preprocessed signal in analog and, after binarization, are digitally evaluated, **characterized in that**
the light time of flight is determined as follows:
- locating the preprocessed signal in a measurement time window (101), whose width is the total width of the histogram (110), by systematic coarse adjustment of the delay of the individual light pulses,
- moving a transition point (112) from a maximum to a minimum or a minimum to a maximum of the preprocessed signal to an observation point within the measurement time window (101), in particular an end point of the measurement time window, by systematic fine adjustment of the delay of the individual light pulses, and
- determining the light time of flight from the necessary delay.

15. The method according to claim 14,
wherein the transition point (112) is the first zero crossing from maximum to minimum of the preprocessed bipolar signal.

16. The method according to claim 14 or 15,
wherein the digital evaluation is implemented on a digital device, such as a programmable logic device, an ASIC or an FPGA (18).

17. The method according to claim 16,
wherein a control (38, 40, 20) for temperature fluctuations is made, wherein, in a temperature compensation cycle, at the time of generating the individual light pulse an electric temperature test signal is sent via a wire loop (40) out of the digital device (18) and back into the digital device (18), and wherein the transmission of the individual light pulse is delayed by a time deviation between measured and expected arrival time of the temperature test signal.

18. The method according to any of claims 14 to 17,
wherein the time intervals between the individual light pulses are varied by systematic and/or random offsets for an interference compensation.

## Revendications

1. Capteur optoélectronique (10) pour mesurer un éloignement ou une variation d'éloignement à partir d'un temps de parcours de la lumière, comprenant les éléments suivants :
- un émetteur de lumière (12) pour émettre une pluralité d'impulsions de lumière individuelles successives,
- un récepteur de lumière (16) pour recevoir les impulsions de lumière individuelles réfléchies ou réémises,
- une unité d'évaluation numérique (22) qui détermine le temps de parcours des impulsions lumineuses individuelles entre l'émission et la réception et détermine à partir de celui-ci le temps de parcours de la lumière au moyen d'un histogramme temporel (110), et
- un élément de prétraitement analogique (28) qui convertit respectivement les impulsions de lumière individuelles reçues dans le récepteur de lumière (16) en un signal prétraité bipolaire, et les fournit à l'unité d'évaluation numérique (22) au moyen d'un convertisseur analogique/numérique (36),
**caractérisé par**
un circuit de retard numérique (20) afin d'émettre les impulsions lumineuses individuelles au moyen de l'émetteur de lumière (12) avec un retard défini,
et l'unité d'évaluation est réalisée pour déterminer le temps de parcours de la lumière de la manière suivante :
- recherche du signal prétraité dans une fenêtre de mesure temporelle (101) dont la largeur est la largeur totale de l'histogramme (110), par déplacement systématique grossier du retard de l'impulsion de lumière individuelle,
- déplacement d'un point de transition (112) depuis un maximum vers un minimum ou depuis un minimum vers un maximum du signal prétraité vers un instant d'observation dans la fenêtre de mesure (101), par déplacement systématique fin du retard de l'impulsion de lumière individuelle, et
- détermination du temps de parcours de la lumière à partir du retard nécessaire.

2. Capteur (10) selon la revendication 1,
qui est réalisé pour piloter le circuit de retard numérique (20) avec des retards qui présentent des écarts tout autour du retard défini et qui ne correspondent au retard défini que dans une valeur moyenne, afin de sortir une moyenne d'un comportement non linéaire du circuit de retard numérique (20).

3. Capteur selon la revendication 1 ou 2,
dans lequel l'unité d'évaluation (22) est réalisée pour déplacer le point de transition (112) vers le bord de la fenêtre de mesure (101) lors du réglage fin du retard.

4. Capteur (10) selon l'une des revendications précédentes,
dans lequel le point de transition (112) est le premier passage par zéro du maximum au minimum du signal bipolaire prétraité.

5. Capteur (10) selon l'une des revendications précédentes,
dans lequel l'unité d'évaluation (22) est réalisée pour la détermination de l'instant de réception dans une phase d'apprentissage préliminaire et pour une évaluation vis-à-vis de modification du point de transition (112) par rapport à l'instant de réception appris, en service, afin de déterminer une modification d'éloignement.

6. Capteur (10) selon la revendication 5,
dans lequel l'unité d'évaluation (22) est réalisée pour accepter une modification d'éloignement uniquement si les valeurs du temps de parcours de la lumière déterminées à partir d'une pluralité d'histogrammes (110) indiquent une modification d'éloignement avec une fréquence plus élevée d'une valeur minimum qu'un éloignement restant constant.

7. Capteur (10) selon l'une des revendications précédentes,
dans lequel le circuit de prétraitement (28) comprend les éléments suivants :
- un amplificateur (30), en particulier un amplificateur à transimpédance, pour amplifier le signal, et/ou
- un filtre (32), en particulier un filtre passe-bande ou un circuit différentiel, pour convertir le signal électrique tout d'abord unipolaire du récepteur de lumière (16) en un signal bipolaire et/ou
- un amplificateur à limitation (34) pour amplifier la part positive ou négative du signal jusqu'à une valeur de saturation.

8. Capteur (10) selon l'une des revendications précédentes,
dans lequel les éléments numériques (20, 22, 38) du capteur sont mis en oeuvre sur un composant numérique, par exemple dans un circuit logique programmable, un circuit ASIC ou un FPGA (18).

9. Capteur (10) selon l'une des revendications précédentes,
dans lequel l'unité d'évaluation (22) comprend une mémoire afin de retenir le temps de parcours jusqu'à un éloignement connu d'une cible d'étalonnage.

10. Capteur (10) selon l'une des revendications précédentes,
dans lequel l'unité d'évaluation (22) est réalisée pour une détermination du niveau de réception, en particulier sous forme de maximum sur un ou plusieurs histogrammes (110).

11. Capteur (10) selon l'une des revendications précédentes,
dans lequel les éléments numériques (20, 22, 38) du capteur sont mis en oeuvre sur un composant numérique comme un FPGA (18) qui comprend additionnellement un système numérique de régulation de température (38), lequel est réalisé pour une régulation de température dans laquelle un signal de test de température électrique est extrait via une boucle conductrice (40) hors du composant numérique (18) et à nouveau introduit dans un cycle de compensation de température à l'instant de la génération de l'impulsion de lumière individuelle, et l'émission de l'impulsion de lumière individuelle est retardée d'un écart temporel entre l'instant d'arrivée mesuré et l'instant d'arrivée attendu du signal de test de température.

12. Capteur (10) selon la revendication 11,
dans lequel le capteur (10) est réalisé pour une exécution du cycle de compensation de température respectivement après une pluralité d'impulsions de lumière individuelles émises, en particulier de toutes les impulsions de lumière individuelles, qui forment un histogramme (110).

13. Capteur (10) selon l'une des revendications précédentes,
dans lequel le capteur (10) comprend un système de compensation de perturbations (20, 22) qui est capable de faire varier les intervalles temporels entre les impulsions de lumière individuelles à raison d'un déplacement systématique et/ou aléatoire, et l'unité d'évaluation (22) est réalisée pour tenir compte du déplacement.

14. Procédé pour mesurer un éloignement ou une variation d'éloignement à partir d'un temps de parcours de la lumière d'une impulsion lumineuse,
dans lequel on émet les unes après les autres une pluralité d'impulsions de lumière individuelles et on détermine le temps de parcours de la lumière à partir d'un histogramme temporel (110) des temps de parcours entre l'émission et la réception des impulsions de lumière individuelles,
et dans lequel les impulsions de lumière individuelles reçues sont converties sous forme analogique en un signal bipolaire prétraité et sont évaluées de manière numérique après une numérisation, **caractérisé en ce que** le temps de parcours de la lumière est déterminé de la manière suivante :
- on recherche le signal prétraité dans une fenêtre de mesure temporelle (101), dont la largeur est la largeur totale de l'histogramme (110), par déplacement systématique grossier du retard de l'impulsion de lumière individuelle,
- on déplace un point de transition (112) depuis un maximum vers un minimum ou depuis un minimum vers un maximum du signal prétraité à un instant d'observation dans la fenêtre de mesure (101), en particulier vers le bord de la fenêtre de mesure, par déplacement systématique fin du retard de l'impulsion de lumière individuelle, et
- on détermine le temps de parcours de la lumière à partir du retard nécessaire.

15. Procédé selon la revendication 14,
dans lequel le point de transition (112) est le premier passage par zéro du maximum au minimum du signal bipolaire prétraité.

16. Procédé selon la revendication 14 ou 15,
dans lequel l'évaluation numérique est mise en oeuvre sur un composant numérique, par exemple dans un circuit logique programmable, dans un circuit ASIC ou sur un FPGA (18).

17. Procédé selon la revendication 16,
dans lequel on procède à une régulation (38, 40, 20) pour des fluctuations de température, dans laquelle un signal de test de température électrique est extrait via une boucle conductrice (40) hors du composant numérique (18) et à nouveau injecté dans un cycle de compensation de température à l'instant de la génération de l'impulsion de lumière individuelle, et l'émission de l'impulsion de lumière individuelle est retardée d'un écart temporel entre l'instant d'arrivée mesurée et l'instant d'arrivée attendue du signal de test de température.

18. Procédé selon l'une des revendications 14 à 17,
dans lequel les intervalles temporels entre les impulsions de lumière individuelle sont variés à raison d'un déplacement systématique et/ou aléatoire, pour une compensation de perturbations.
